# EUROPÄISCHE PATENTANMELDUNG

(11) **EP 1 449 717 A2**
(43) Veröffentlichungstag der Anmeldung: **25.08.2004**
(21) Anmeldenummer: 04400006.5
(22) Anmeldetag: 20.02.2004
(51) Int. Cl.: B60Q 1/40

(54) **Blinkerrücksetzung und Verfahren hierfür**

(30) Priorität: 20.02.2003 DE 10308474
(71) Anmelder: Valeo Schalter und Sensoren GmbH, 74321 Bietigheim-Bissingen (DE)
(72) Erfinder: Rath, Joachim, 74379 Ingersheim (DE); Hertl, Uwe, 75031 Eppingen (DE)
(74) Vertreter: Dreiss, Fuhlendorf, Steimle & Becker

(57) **Zusammenfassung**

Die Erfindung betrifft eine Blinkerrücksetzung (10) zum Rücksetzen eines gesetzten Fahrzeugblinkers, mit der Drehbewegung des Lenkrads folgenden Auslösemitteln (12) und mit der Drehbewegung des Lenkrads nicht folgenden Rücksetzmitteln (16), wobei beim Rückdrehen des Lenkrades die Rücksetzmittel (16) von den Auslösemitteln (12) betätigt werden und der gesetzte Blinker zurückgesetzt wird, wobei die Rücksetzmittel (16) ein von den Auslösemitteln (12) betätigbares, beweglich gelagertes Schaltteil (20) mit wenigstens einem Sender (22) bzw. Empfänger und wenigstens einen gegenüber Schaltteil (20) ortsfest angeordneten, mit dem Sender (22) bzw. Empfänger berührungslos korrespondierenden Empfänger (24,26) bzw. Sender umfassen, wobei die Auslösemittel (12) beim Drehen des Lenkrades das Schaltteil (20) betätigen und dadurch ein Sender (22) in den Erfassungsbereich eines Empfängers (24,26) bewegt und ein Signal zur Rücksetzung des Blinkers generiert wird.

## Beschreibung

Die Erfindung betrifft eine Blinkerrücksetzung und ein Verfahren zum Rücksetzen eines gesetzten Fahrzeugblinkers.

Derartige Blinkerrücksetzungen und zugehörige Verfahren sind beispielsweise aus der DE 100 37 586 A1 bekannt. Dabei sind der Drehbewegung des Lenkrads folgende Auslösemittel unmittelbar oder mittelbar an dem Lenkrad angeordnet. Diese Auslösemittel, die beispielsweise in Form von Nocken ausgebildet sein können, betätigen nach dem Setzen des Blinkers beim Rückdrehen des Lenkrades der Drehbewegung des Lenkrades nicht folgende Rücksetzmittel, die ein Rücksetzen des Blinkers bewirken.

Die bekannten, mechanischen Blinkerrücksetzungen haben den Nachteil, dass beim Betätigen der Auslösemittel Geräusche auftreten. Außerdem sind sie sehr störanfällig, da bei Eindringen von unerwünschten Medien, wie beispielsweise Staub oder Schmutzpartikeln, das Betätigen der Auslösemittel negativ beeinträchtigt werden kann. Bekannte, mechanische Blinkerrücksetzungen unterliegen zudem einem Verschleiß.

Der vorliegenden Erfindung liegt deshalb die Aufgabe zugrunde, eine Blinkerrücksetzung und ein zugehöriges Verfahren bereitzustellen, dass möglichst weitgehend geräuschfrei arbeitet und gegen Verschmutzung unanfällig ist. Außerdem soll eine möglichst verschleißfrei arbeitende Blinkerrücksetzung bereitgestellt werden.

Diese Aufgabe wird gelöst durch eine Blinkerrücksetzung, die sich dadurch kennzeichnet, dass die Rücksetzmittel ein von den Auslösemitteln betätigbares, beweglich gelagertes Schaltteil mit wenigstens einem Sender beziehungsweise Empfänger und wenigstens einen, gegenüber dem Schaltteil ortsfest angeordneten, mit dem Sender beziehungsweise Empfänger berührlos korrespondierenden Empfänger beziehungsweise Sender umfassen, wobei die Auslösemittel beim Drehen des Lenkrads das Schaltteil betätigen und dadurch ein Sender in den Erfassungsbereich eines Empfängers bewegt und ein Signal zur Rücksetzung des Blinkers generiert wird. Dadurch, dass der wenigstens eine Sender mit dem wenigstens einen Empfänger berührungslos korrespondiert, treten keine Geräusche auf. Außerdem tritt aufgrund der berührungslosen Anordnung zwischen dem Empfänger und Sender kein Verschleiß auf, was zu einer dauerhaft sehr genau arbeitenden und zu einer hohen Lebensdauer der Blinkerrücksetzung führt.

Eine besonders vorteilhafte Ausführungsform der Erfindung ergibt sich dann, wenn das Schaltteil einen Sender aufweist, und wenn zwei ortsfest angeordnete Empfänger derart vorgesehen sind, dass der Sender beim Drehen des Lenkrades in die eine Richtung in den Erfassungsbereich des einen Senders und beim Drehen in die andere Richtung in den Erfassungsbereich des anderen Senders gelangen kann. Eine derartige Ausführungsform hat dabei den Vorteil, dass die Drehrichtung des Lenkrades erfassbar ist, wobei ein Rücksetzen des Blinkers nur dann erfolgt, wenn das Lenkrad zurückgedreht wird und nicht, wenn das Lenkrad eine volle Umdrehung überdreht. Hierdurch wird gewährleistet, dass die Blinkerrücksetzung nur dann erfolgt, wenn das Lenkrad entgegen der ursprünglichen Drehrichtung verdreht wird.

Wird das Lenkrad weiter in die gleiche Richtung verdreht, beispielsweise beim Einfahren in eine relativ enge Kurve, erfolgt keine Rücksetzung des Blinkers.

Erfindungsgemäß kann vorgesehen sein, dass der wenigstens eine Sender elektrische, magnetische und/oder optische Signale sendet oder reflektiert, und dass der wenigstens eine Empfänger diese Signale empfängt. Vorteilhafterweise werden insbesondere magnetische Signale verwendet, wobei Dauermagnete in Verbindung mit Magnetfeldsensoren, wie beispielsweise Hall-Elemente, Verwendung finden können. Als Sender und/oder Empfänger können außerdem beispielsweise Leuchtdioden oder Magnetspulen eingesetzt werden.

Das Schaltteil kann erfindungsgemäß als Schiebeteil oder als Schwenkteil ausgebildet sein. Ein Schiebeteil ist entlang einer vorzugsweise Geraden verschiebbar gelagert; ein Schwenkteil um eine feste Schwenkachse verschwenkbar.

Um das Schaltteil nach dem Bewegen durch die Auslösemittel wieder in eine neutrale Ausgangslage rückzustellen, können erfindungsgemäß Rückstellmittel vorgesehen sein. Derartige Rückstellmittel können insbesondere Federelemente sein, die das Schaltteil in der neutralen Ausgangslage halten.

Eine besonders bevorzugte Ausführungsform der Erfindung ergibt sich dann, wenn die Rücksetzmittel wenigstens eine Auswerteeinheit umfassen, die die von dem wenigstens einen Sender empfangenen Signale auswertet und den jeweiligen Blinker in Abhängigkeit von den empfangenen Signalen rücksetzt. Die Auswerteeinheit leitet folglich ein Rücksetzen des jeweils gesetzten Fahrzeugblinkers ein, wenn die Rücksetzmittel beziehungsweise die Empfänger ein entsprechendes Signal empfangen haben. Die Auswerteeinheit kann beispielsweise eine Transistorstufe oder einen FlipFlop umfassen.

Ebenfalls vorteilhaft ist, wenn die Auswerteeinheit den jeweiligen Blinker in Abhängigkeit von Signalen setzt, die von einem Blinkerschalter generiert und der Auswerteeinheit zugeführt werden. Ein Blinkerschalter kann beispielsweise ein bekannter Lenkstockschalter sein, der durch den Fahrzeuglenker betätigbar ist

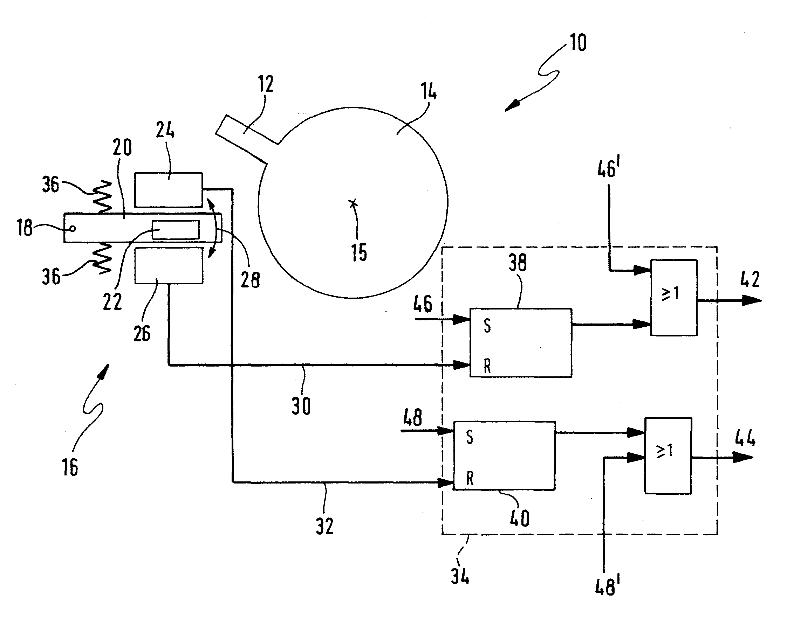

Weitere vorteilhafte Einzelheiten und Ausgestaltungen der Erfindung sind der folgenden Beschreibung zu entnehmen, in der die Erfindung anhand des in der Zeichnung dargestellten Ausführungsbeispiels näher beschrieben und erläutert ist.

In der Figur ist eine erfindungsgemäße Blinkerrücksetzung 10 schematisch dargestellt. Die Blinkerrücksetzung 10 umfasst ein der Drehbewegung eines nicht dargestellten Lenkrads folgendes Auslösemittel 12, das beispielsweise an einer der Drehbewegung folgenden Lenksäule 14 angeordnet sein kann. Die Drehachse der Lenksäule 14 beziehungsweise des nicht dargestellten Lenkrades ist mit der Bezugszahl 16 gekennzeichnet. Die Auslösemittel 12 können bei der Erfindung als sich in axialer oder radialer Richtung erstreckende Nocken ausgebildet sein. Die Auslösemittel 12 korrespondieren mit der Drehbewegung des Lenkrades nicht folgenden Rücksetzmitteln 16. Nachdem nicht dargestellte Blinker über beispielsweise einen nicht dargestellten Betätigungsschalter gesetzt werden, setzen die Rücksetzmittel 16 bei Betätigung durch die Auslösemittel 12 den Blinker zurück. Dazu weisen die Rücksetzmittel 16 ein von den Auslösemitteln 12 betätigbares, um eine Schwenkachse 18 verschwenkbar gelagertes, Schaltteil 20 auf. Das Schaltteil 20 weist auf seiner der Achse 18 abgewandten Seite einen Sender 22 auf, der in der neutralen Ausgangslage des Schaltteils 22 mittig zwischen zwei gegenüber dem Schaltteil 20 ortsfest angeordneten Empfängern 24, 26 angeordnet ist. Der Sender 22 korrespondiert mit den Empfängern 24, 26 berührungslos.

Die Auslösemittel 12 und das Schaltteil 20 sind derart angeordnet, dass die Auslösemittel 12 beim Verdrehen des Lenkrades beziehungsweise der Lenksäule 14 das Schaltteil 20 aus seiner neutralen Ausgangslage in eine Richtung des Doppelpfeils 28 auslenken. Je nach Drehrichtung des Lenkrades wird hierdurch der Sender 22 entweder in den Erfassungsbereich des Empfängers 24 oder in den Erfassungsbereich des Empfängers 26 bewegt. Hierdurch wird ein Signal 30 beziehungsweise 32 generiert, das einer Auswerteeinheit 34 zugeführt wird. Damit das Schaltteil 20 nach dem Auslenken durch die lenkradseitigen Auslösemittel 12 wieder in seine Ausgangslage zurückbewegt wird, sind Rückstellmittel 36 in Form von Federelementen vorgesehen.

Als Sender 22 kann beispielsweise ein Dauermagnet Verwendung finden. Die Empfänger 24, 26 sind dann als Magnetfeldsensoren ausgebildet, beispielsweise als Hall-Sensoren oder Hall-IC's. Allerdings können erfindungsgemäß auch andere Sende- und Empfängerpaare Verwendung finden, die neben magnetischen Signalen optische oder elektrische Signale senden und empfangen.

Die Auswerteeinheit 34 weist zwei Steuerelemente 38, 40 auf, wobei das Steuerelement 38 zur Ansteuerung des rechten Blinkers (Signal 42) und das Steuerelement 40 zur Ansteuerung des linken Blinkers (Signal 44) dient.

Der Auswerteeinheit 34 werden außerdem Signale 46, 48 eines nicht dargestellten Blinkerschalters zugeführt. Aufgrund der Eingangssignale 46, 48 setzen die Steuerelemente 38, 40 den jeweiligen Blinker über die Ausgangssignale 42, 44. Wird nach dem Blinkersetzen das Lenkrad rückgedreht, wird von dem Sender 22 und den Empfängern 24, 26 ein entsprechende Rücksetzsignal 30, 32 erzeugt, das der Auswerteeinheit 24 zugeführt wird. Die Steuerelemente 38, 40 bewirken dann ein Rücksetzen der jeweils rechten beziehungsweise linken Blinker (Signal 42 beziehungsweise 44).

Dadurch, dass zwei verschiedene Empfänger 24, 26 vorgesehen sind, kann die Drehrichtung des Lenkrades erkannt werden. Ein Rücksetzen des Blinkers erfolgt nur dann, wenn das Lenkrad tatsächlich zurückgedreht wird, und nicht wenn das Lenkrad durch Weiterdrehen des Lenkrades in der ursprünglichen Drehrichtung überdreht wird.

Die Auswerteeinheit 34 sieht als Eingangssignale ferner die Signale 46' und 48' vor, die dann von dem nicht dargestellten Blinkerschalter generiert werden, wenn durch beispielsweise Antippen des Betätigungselements des Blinkerschalters kein dauerhaftes Blinken, sondern ein lediglich einmaliges Blinken generiert werden soll. Ein derartiges Blinken ist beispielsweise für den Spurwechsel, insbesondere auf der Autobahn, hilfreich.

## Patentansprüche

1. Blinkerrücksetzung (10) zum Rücksetzen eines gesetzten Fahrzeugblinkers, mit der Drehbewegung des Lenkrads folgenden Auslösemitteln (12) und mit der Drehbewegung des Lenkrads nicht folgenden Rücksetzmitteln (16), wobei beim Rückdrehen des Lenkrades die Rücksetzmittel (16) von den Auslösemitteln (12) betätigt werden und der gesetzte Blinker zurückgesetzt wird, **dadurch gekennzeichnet, dass** die Rücksetzmittel (16) ein von den Auslösemitteln (12) betätigbares, beweglich gelagertes Schaltteil (20) mit wenigstens einem Sender (22) bzw. Empfänger und wenigstens einen gegenüber dem Schaltteil (20) ortsfest angeordneten, mit dem Sender (22) bzw. Empfänger berührungslos korrespondierenden Empfänger (24, 26) bzw. Sender umfassen, wobei die Auslösemittel (12) beim Drehen des Lenkrades das Schaltteil (20) betätigen und dadurch ein Sender (22) in den Erfassungsbereich eines Empfängers (24, 26) bewegt und ein Signal zur Rücksetzung des Blinkers generiert wird.

2. Blinkerrücksetzung (10) nach Anspruch 1, **dadurch gekennzeichnet, dass** das Schaltteil (20) einen Sender (22) aufweist und dass zwei ortsfest angeordnete Empfänger derart vorgesehen sind, dass der Sender (22) beim Drehen des Lenkrades in die eine Richtung in den Erfassungsbereich des einen Senders (24) und beim Drehen in die andere Richtung in den Erfassungsbereich des anderen Senders (26) gelangen kann.

3. Blinkerrücksetzung (10) nach Anspruch 1 oder 2, **dadurch gekennzeichnet, dass** der wenigstens eine Sender (22) elektrische, magnetische und/oder optische Signale sendet oder reflektiert und dass der wenigstens eine Empfänger (24, 26) diese Signale empfängt.

4. Blinkerrücksetzung (10) nach Anspruch 1, 2 oder 3, **dadurch gekennzeichnet, dass** das Schaltteil (20) als Schiebeteil oder als Schwenkteil ausgebildet ist.

5. Blinkerrücksetzung (10) nach einem der vorhergehenden Ansprüche, **dadurch gekennzeichnet, dass** Rückstellmittel (36) vorgesehen sind, die das Schaltteil (20) nach dem Bewegen durch die Auslösemittel (12) wieder in eine neutrale Ausgangslage rückstellen.

6. Blinkerrücksetzung (10) nach einem der vorhergehenden Ansprüche, **dadurch gekennzeichnet, dass** die Rücksetzmittel (16) wenigstens eine Auswerteeinheit (34) umfassen, die die empfangenen Signale auswertet und den jeweils gesetzten Blinker in Abhängigkeit von den empfangenen Signalen rücksetzt.

7. Blinkerrücksetzung (10) nach Anspruch 6, **dadurch gekennzeichnet, dass** die Auswerteeinheit (34) den jeweiligen Blinker in Abhängigkeit von Signalen (22, 24) setzt, die von einem Blinkerschalter generiert und der Auswerteinheit (34) zugeführt werden.

8. Verfahren zum Rücksetzen eines gesetzten Fahrzeugblinkers, wobei der Drehbewegung des Lenkrads folgende Auslösemittel (12) und der Drehbewegung des Lenkrads nicht folgende Rücksetzmittel (16) vorgesehen sind, und wobei beim Rückdrehen des Lenkrades die Rücksetzmittel (16) von den Auslösemitteln (12) betätigt werden und der gesetzte Blinker zurückgesetzt wird, **dadurch gekennzeichnet, dass** die Rücksetzmittel (16) ein von den Auslösemitteln (12) betätigbares, beweglich gelagertes Schaltteil (20) mit wenigstens einem Sender (22) bzw. Empfänger und wenigstens einen gegenüber dem Schaltteil (22) ortsfest angeordneten, mit dem Sender (22) bzw. Empfänger berührungslos korrespondierenden Empfänger (24, 26) bzw. Sender umfassen, wobei die Auslösemittel (12) beim Drehen des Lenkrades das Schaltteil betätigen und dadurch ein Sender (22) in den Erfassungsbereich eines Empfängers (24, 26) bewegt und ein Signal zur Rücksetzung des Blinkers generiert wird.

9. Verfahren zum Betreiben einer Blinkerrücksetzung (10) nach einem der Ansprüche 1 bis 7.

10. Auswerteeinheit (34) für eine Blinkerrücksetzung (10) nach einem der Ansprüche 5 bis 7 und/oder zur Anwendung in einem Verfahren nach Anspruch 8 oder 9.
